# EUROPEAN PATENT SPECIFICATION

(11) **EP 2 995 661 B1**
(45) Date of publication and mention of the grant of the patent: **01.11.2017**
(21) Application number: 14184658.4
(22) Date of filing: 12.09.2014
(51) Int. Cl.: C09D 123/00

(54) **Dual purpose coating**
Beschichtung mit doppeltem Zweck
Revêtement à double usage

(30) Priority: 11.09.2014 US 201414483937
(43) Date of publication of application: 16.03.2016
(73) Proprietor: Deflecto, LLC, Indianapolis, IN 46250 (US)
(72) Inventor: Malmloff, Craig, Fishers, IN 46038 (US); Foley, Patrick John, Fishers, IN 46037 (US); Regula, Joseph C., Broadview Heights, OH 44147 (US); Rafter, Robert, Dover, OH 44622 (US); Rogers, Greg, Woodbury, TN 37190 (US); Maxwell, Shawn, Memphis, TN 38118 (US)
(74) Representative: Wilkinson, Stephen John

(56) References cited:
- EP-A2- 1 884 607
- WO-A1-93/14927
- WO-A2-03/100162
- WO-A2-2006/076487
- DD-A3- 271 830
- JP-A- 2005 042 009
- US-A1- 2008 305 345
- US-A1- 2009 246 432

## Description

### FIELD OF THE INVENTION

The present invention is directed to a protective covering and to a method of making a slip-resistant protective covering having a coating effective to prevent the protective covering from shifting out of place on various underlying surfaces.

### BACKGROUND OF THE INVENTION

Protective mats for protecting flooring material from damage and wear are well known. Generally, protective mats consist of a flat panel made of a material that is suitable to prevent wear and tear on the underlying flooring material. In some instances, the protective mat may include studs or short spikes on the underside of the flat panel to hold the protective mat firmly in place on a textured flooring material such as carpeting. While protective mats with short spikes to prevent the protective mat from sliding or moving and improve the placement of a protective mat on textured flooring material, they are not suitable for use with relatively smooth flooring materials like wood or tiled floor.

Generally, protective mats with a smooth, non-studded bottom surface are used for smooth flooring like tile or hardwood. These flooring protection mats may have a non-slip coating on the bottom surface of the mat. A skidproof mat is described in US 2009/246432A. This mat comprises, *inter alia*, a rubber layer, a base layer and a protection film covering each of the first and second major surfaces of the rubber layer. The base layer in this mat is disposed within the thickness of the rubber layer so that the first and second major surfaces of the rubber layer constitute major outer surfaces of the skidproof mat. However, these non-slip coatings are only effective on smooth surface flooring and do not prevent the flooring protection mat from slipping on textured floorings such as carpet and even lower pile carpets like commercial grade carpet.

Some attempts to provide a protective mat that is suitable for both smooth and textured surfaces have been made. For example, some protective mats employ felt backing and recessed studs to accommodate both a textured surface and a smooth surface. However, it has been found that the felt backing and recessed studs do not prevent the flooring protection mat from moving or slipping on textured surfaces like high pile carpet, medium pile carpet and commercial grade carpet. Accordingly, there is a need for a convertible protective mat that provides a protective barrier by covering an underlying surface regardless of its surface material and texture.

### SUMMARY OF THE INVENTION

According to the present invention, there is provided a method of making a slip-resistant protective covering comprising the steps of:
providing a body having an upper planar surface and a lower planar surface;
applying a coating composition to the underside of the lower planar surface; and
curing the coating composition to provide a coating on the underside of the lower planar surface,
wherein the coating composition comprises a copolymer resin which comprises ethylene-vinyl acetate copolymer and a tackifier, wherein the ethylene-vinyl acetate copolymer is present in the copolymer resin in an amount of 40 to 95% by weight.

The invention, further, provides a protective covering which comprises a body having an upper planar surface and a lower planar surface and a coating provided on the underside of the lower planar surface wherein the coating comprises a cured copolymer resin which comprises ethylene-vinyl acetate copolymer and a tackifier, wherein the ethylene-vinyl acetate copolymer is present in the copolymer resin in an amount of 40 to 95% by weight.

According to one embodiment, a convertible protective floor covering or convertible floor mat or other substrate is provided with a coating on the underside of the protective floor covering. The substrate of the present invention could according to a different embodiment be configured for use on many other surfaces, such as a desk or table.

The coating on the underside of the protective floor covering serves as a friction device that is particularly ideal for use on both smooth and non-smooth or textured surfaces, including hard floor, commercial pile, low pile, medium pile carpet and high pile carpet.

The coating comprises a copolymer resin which comprises ethylene-vinyl acetate ("EVA") and a tackifier. Each coating can include one or more additives well known to persons of ordinary skill in the art that allow the coating to bond to a surface and/or vary the coefficient of friction of the coating. Each coating can be applied to a surface or surfaces, or a portion of a surface or surfaces, of a protective covering or substrate by various methods known to a person of ordinary skill in the art and allowed to cure. The resulting protective covering can be used on multiple surfaces without worry of damage to the surface or worry of movement of protective covering with use.

EVA, which has softness and flexibility like elastomers, but can be processed like thermoplastics, is an effective coating component. Among other benefits of EVA, in its cured state it has good stress-crack resistance, UV radiation resistance and waterproof properties. Additionally, when EVA is used there is no transfer of the adhesive coating to the underlying surface even after long term use. Finally, EVA is a cost effective material and can easily be applied and cured in the manufacturing process.

In addition to tackifiers, other additives such as plasticizers and the like can be added to the EVA copolymer resin to increase the coefficient of friction of the coating and improve other coating characteristics such as adhesion, color, or clarity. The resulting mixture is applied to a surface or a portion of a surface of a protective floor covering with, for example, mechanical spray guns or a roller transfer system and allowed to cure for a time or dwell and at a temperature to remove all water from film in order to form a film or coating on the protective floor covering. These times and temperatures are well known to those of ordinary skill in the art.

In one embodiment of the invention, a catalyst can be blended or added to the EVA based coating. In another embodiment, a plasticizer is blended or added to the copolymer resin. The tackifier is blended or added to the copolymer resin. These additives can be added alone or in combination to the EVA based coating.

According to the invention, the copolymer resin contains EVA in a wt% amount from and including 40-95%.

In other embodiments, the copolymer resin can include Acrylic or Poly Vinyl Acetate (PVA) in combination with EVA.

Additionally, in another embodiment, the copolymer resin has a static coefficient of friction from 1.0 to 1.10.

According to the invention, the protective floor covering includes a body having an upper and lower planar surface and a copolymer resin coating on the lower planar surface.

Additionally, in another embodiment, the copolymer resin has a static coefficient of friction from 1.0 to 1.10.

### BRIEF DESCRIPTION OF THE DRAWINGS

The accompanying drawings, which are incorporated in and constitute a part of this specification, illustrate an implementation of the present invention and, together with the description, serve to explain the advantages and principles of the invention. In the drawings:
Fig.1 depicts the protective floor covering with a coating being placed on a carpet.
Fig.2 depicts a portion of a protective floor covering with the coating.
Fig.3 depicts the protective floor covering with a coating being placed on a hard surface.

### DETAILED DESCRIPTION OF THE INVENTION

In accordance with the embodiments of the present invention, the present coating relates to protective floor coverings and more particularly to protective floor coverings that are suitable on smooth and/or textured surfaces.

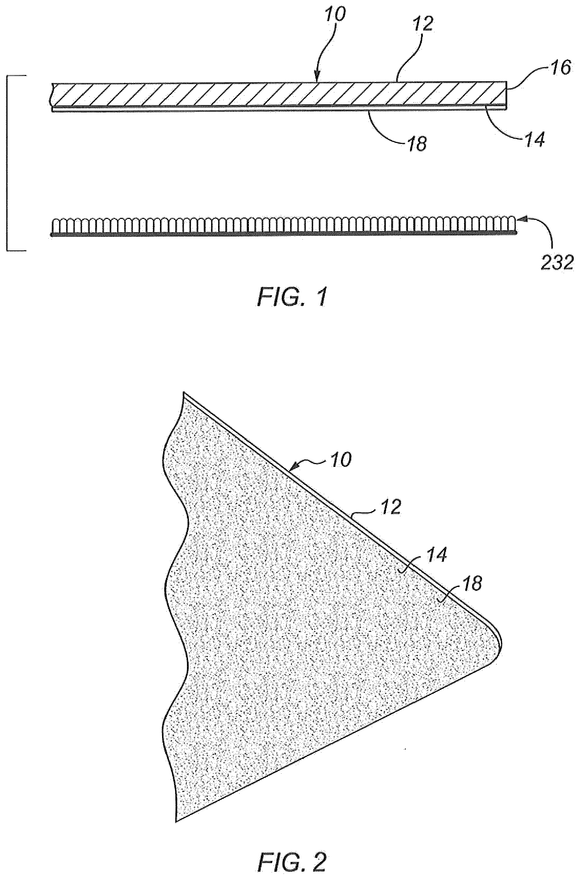

The protective floor covering as shown in Fig.1 in an exemplary embodiment includes a body 10 having upper and lower planar surfaces 12, 14, that are parallel to each other and are spaced from each other by an outermost perimeter edge 16 that extends entirely about the body 10. The coating is 18 is applied to the underside of the lower planar surface. The body 10 can be placed on a carpet 232 as a protective floor covering. The coating of present invention could be configured to work with virtually any size or shape of floor covering or substrate, including for example and without limitation non-planar substrates, multi-piece substrates such as slatted floor coverings, floor coverings having curved or irregular surfaces, and various other shapes and configurations which are known to those skilled in the art.

Fig. 2 depicts the protective floor covering that includes a body 10 having upper and lower planar surfaces 12, 14, that are parallel to each other and are spaced from each other by an outermost perimeter edge 16 that extends entirely about the body 10. The coating is 18 is applied to the underside of the lower planar surface 14. The planar surfaces can be smooth, relatively smooth or include various textures well known to those of ordinary skill in the art such as multiple planar surfaces, grooves, ribbing or dimples. The body 10 is of a generally uniform thickness and may be made of a material such as, but not limited to rubber, plastic, and/or the like, that is sufficiently durable to withstand wear and/or tear depending on and during use of for example the support of a chair on the upper surface 12 or lower surface 14 of the body 10. The body 10 may be made of a material that is transparent, translucent, opaque, and/or a combination thereof. The body 10 may have a pattern, for instance, on the lower surface 14 of the body, to form a design thereon. The body 10 may be made of a material that is transparent, translucent, opaque, and/or a combination thereof. The protective coating 16 can be applied to the lower planar surface 14 of the body.

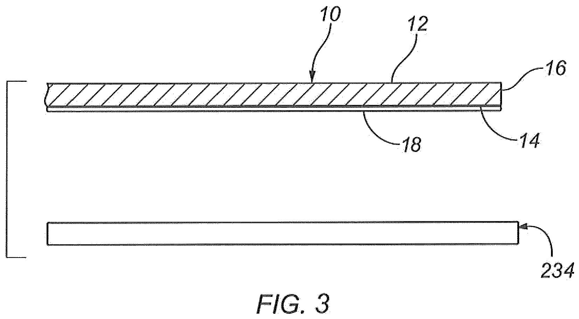

The protective floor covering as shown in FIG. 3 includes a body 10 having upper and lower planar surfaces 12, 14, that are parallel to each other and are spaced from each other by an outermost perimeter edge 16 that extends entirely about the body 10. The coating is 18 is applied to the underside of the lower planar surface. The body 10 can be placed on a smooth surface 24 as a protective floor covering.

In general, the Inventors found that each type of resin described below can be applied to the protective floor covering in order to obtain a protective floor covering that is suitable on smooth and or textured surfaces. One resin is includes EVA and the other resin includes rubber. Each of these resins can be provided on a surface to impart frictional resistance between the protective floor covering and the underlying surface. These coatings work on all surfaces and particularly well for protective floor coverings that are made of wood (either a solid composite or a flexible composite), plastic, glass, porous and non-porous surfaces because the coating adheres to the underlying respective surface of the protective floor covering and imparts frictional resistance.

The frictional resistance may be quantified by the static coefficient of friction of the coating. In order to provide frictional resistance between the protective floor covering and the underlying surface, the static coefficient of friction should be higher than static coefficient of friction of the underlying surface. In specific embodiments of each coating, the static coefficient of friction may be not tested and could be a pressure sensitive with no slip at any angle. A preferred range of static coefficient of friction for each resin is from 1.0 to 1.10 not tested > 1.1> psa qualities < 1.0 < anti skid and harder film more slip.

In general, the EVA coating is a copolymer resin of a polymer having a branched or straight chain with a wide range of film formation temperatures and an amount of EVA sufficient to form a copolymer resin with a high coefficient of friction without causing the resulting copolymer resin to be pressure sensitive or transfer to a subsurface after initial use and extended use.

Specifically, as the amount of EVA wt% increases with respect to the copolymer resin wt%, the coefficient of friction increases. However, if the wt% of EVA is too high, it becomes difficult to remove the protective floor covering to which the copolymer coating has been applied to from the underlying surface i.e. carpeting or wood. If the wt% of EVA is too low, the protective floor covering cannot be used on varying surfaces. Thus, in order for the copolymer resin with EVA to be suitable for smooth and textured surfaces, the amount of EVA is preferably in a wt%, compared to the total wt% of the copolymer resin i.e. from and including 40 wt% to 95 wt %, 40 wt% to 60 wt%, and preferably 50 wt% to 60 wt%. Acrylics, Poly Vinyl Acetate and other similar compounds known by persons of ordinary skill in the art may also be used in place of or in combination with EVA in the copolymer resin.

The copolymer resin with a EVA can also contain other additives to improve overall characteristics of the coating. For example, any plasticizer known to those of ordinary skill in the art can be added in order to soften the coating, improve flexibility and durability of the EVA based coating. Plasticizers can include ester plasticizers such as esters of polycarboxylic acids with linear or branched chains and that may include aliphatic alcohol substituents, phthalate esters of straight chain and branched-chain alkyl alcohols, sebacates, adipates, terephthalates, dibenzoates, gluterates, phthalates, azelates, and other specialty blends or the like known to persons of ordinary skill in the art. Preferably, the coating can include BENZOFLEX 50 or dibutyl phthalate (DBP) as a plasticizer.

Additionally, pigments, which are well known to persons of ordinary skill in the art could be used to alter or enhance the coloring of the resulting coating. Fillers known to those of ordinary skill in the art can also be added to further improve performance or reduce production costs.

The a copolymer with an EVA component can also include a catalyst. The catalyst can be added to control the rates of polymerization and other reactions occurring within the copolymer resin. Suitable catalysts known to those of ordinary skill in the art can also be used to increase adhesion of the coating to the underlying surface of the protective floor covering and change the coefficient of friction of the coating.

Several tests were conducted on the copolymer resin with EVA to determine its suitability as a coating on a protective floor covering for different underlying surfaces compared to other protective floor coverings.

One such test conducted was the standard method for determining the static coefficient of friction for the coating. Specifically, the static coefficient of friction of Ceramic Tile and other like surfaces by the Horizontal Dynamometer pull meter method (ASTM C1028) was conducted to measure the static coefficient of friction of ceramic tile or other surfaces under various conditions. The ASTM C1028 test determines the static coefficient of friction by dragging the top surface across the lower surface while measuring the force to initiate the movement. Specifically, the top surface has a ten pound load to emulate usage by actual traffic and the lower surfaces were interchanged to develop static coefficient of friction values for various surfaces. Additional tests were conducted using water and other cleaning methods to determine the effect if any on the coefficient of friction between the chair mats and the substrate. In each instance exposure occurred within 30 seconds of the listed action below. After the test is conducted, measurements are calculated to determine the static coefficient of friction. A higher static coefficient of friction ("COF") value indicates more slip resistance. Test samples were made of varying thickness PVC.

In this test, Comparative Example 1 was a protective floor covering with anchor bar studs and no adhesive coating. Comparative Example 2 was a protective floor covering with folded studs and no adhesive coating. Comparative Example 3 was a protective floor covering with conical studs and no adhesive coating. Comparative example 4 was a protective floor mat with no studs and no coating. Example 1 was a protective floor mat with an adhesive coating of a copolymer resin with EVA. The results of the testing over carpet, vinyl and wood surfaces are shown below in Tables 1 through 3.

**Table 1**

| 50 Ounce Cut Pile Carpet | | | | | |
|---|---|---|---|---|---|
| Test Mode | Comparative Ex. 1 | Comparative Ex. 2 | Comparative Ex. 3 | Comparative Ex. 4 | Example 1 |
| Dry | .92 | .88 | .86 | .94 | 3.56 |
| Wet -Distilled Water | .79 | .83 | .82 | .92 | 1.68 |
| Dish Detergent | .74 | .64 | .59 | .88 | 1.09 |
| Steam Mop | .70 | .69 | .49 | .92 | 1.39 |
| Spot Shot | .54 | .49 | .59 | .77 | .98 |
| Tested after redried | .91 | .84 | .84 | .91 | 2.47 |

**Table 2**

| Sheet Vinyl (IVC) | | | | | |
|---|---|---|---|---|---|
| Test Mode | Comparative Ex. 1 | Comparative Ex. 2 | Comparative Ex. 3 | Comparative Ex. 4 | Example 1 |
| Dry | .29 | .32 | .29 | .26 | 1.46 |
| Wet -Distilled Water | .28 | .21 | .20 | .21 | .53 |
| Dish Detergent | .21 | .18 | .18 | .22 | .29 |
| Steam Mop | .25 | .24 | .21 | .20 | .36 |
| Spot Shot | .21 | .15 | .18 | .17 | .20 |
| Tested after redried | .29 | .29 | .28 | .25 | 1.12 |

**Table 3**

| Engineered Wood Flooring | | | | | |
|---|---|---|---|---|---|
| Test Mode | Comparative Ex. 1 | Comparative Ex. 2 | Comparative Ex. 3 | Comparative Ex. 4 | Example 1 |
| Dry | .33 | .36 | .30 | .30 | 2.28 |
| Wet-Distilled Water | .21 | .18 | .17 | .17 | .83 |
| Dish Detergent | .20 | .17 | .17 | .17 | .46 |
| Steam Mop | .21 | .25 | .18 | .20 | .46 |
| Spot Shot | .17 | .16 | .15 | .17 | .22 |
| Tested after redried | .31 | .35 | .30 | .28 | .79 |

Based on the above test results, the copolymer resin with EVA showed a higher COF than the comparative samples over carpet, vinyl and wood surfaces. Furthermore, it is apparent that the same resin coating is suitable for multiple surfaces when compared to the comparative examples. This is evidenced by Comparative Example 1, which showed good COF for carpeting but was ineffective on smooth surfaces like vinyl or wood, while Example 1 showed good COF for each surface type tested, making the protective floor mat covering suitable for different underlying surfaces.

Testing was also conducted to determine the effect rolling traffic has on a particular flooring surface, In this test, known as the Phillips Roll Chair Test, the sample is subjected to the reciprocating action of a chair base having chair castors, which is loaded to 150 pounds total weight. The chair castors are set to cause a random cycling motion resulting in an oval shaped wear pattern. After a predetermined number of cycles, the test sample is given a numerical rating based on the general appearance and the movement of the chair mat is monitored from the original set point.

In the Phillips Roll Chair Test, Example 2 was a protective floor mat a protective floor mat with an adhesive coating of a copolymer resin with EVA. The results of the testing over varying carpet piles and laminate surfaces are shown below in Table 4.

**Table 4**

| Cycles | Example 2 | Appearance Rating | "X" Direction Movement at 500 cycles | "Y" Direction Movement at 500 cycles |
|---|---|---|---|---|
| 20,000 | 6 non Slip Material/Laminate Floor | Material showed very slight cracking from the heavy traffic. The soiled section showed no indication of adhesive transfer to the flooring | 4.0 mm | 5.0 mm |
| 20,000 | 6 non slip material/pile carpeting | Material showed very slight cracking from the heavy traffic. The soiled section showed no indication of adhesive transfer to the flooring | 5.5 mm | 6.0 mm |
| 20,000 | 6 Non Slip Material/Laminate Floor/Carpet | Material showed very slight cracking from the heavy traffic. The soiled section showed no indication of adhesive transfer to the flooring | 4.0 mm | 5.0 mm |
| 20,000 | Reverse Coated/ 35 oz Nylon Pile Cut Carpet | Chair pad showed noticeable fracturing as a result of heavy trafficking over the carpet. The soiling test completed on the carpet test substrate did not reveal any adhesive transfer from the chair pad to the carpet surface. | 7 mm | 10 mm |
| 20,000 | Reverse Coated/ Laminate Floor | Chair pad showed noticeable fracturing as a result of heavy trafficking. The soiling test completed on the laminate test substrate did not reveal any adhesive transfer from the chair pad to the laminate. | 1 mm | 2 mm |

Based on the above test results, the copolymer resin with EVA showed minimal shifting and reduced wear on the protective floor covering on varying surfaces. This is evidenced by Example 2 which showed minimal movement in the "X" and "Y" directions on varying underlying surfaces making the protective floor mat covering suitable for different underlying surfaces for extended periods of use.

The method for applying each of the copolymer resins to the lower surface of the body is described below. Either copolymer resin can be applied to the lower surface of the body with mechanical spray guns or a roller transfer system. These methods are well known to persons of ordinary skill in the art. After application, the copolymer resin is cured at or near room temperature or higher for a time period in order to form a film or coating on lower surface of the body.

For example, the coatings may cure at 70 to 75°F in 60 seconds or less. Curing is not limited to an ambient temperature and can occur at temperatures from 75°F to 95°F and above. The time period required for the coating to cure varies on the thickness coating and atmospheric conditions. For example, high humidity increases curing time. Similarly, thicker coatings will require a longer curing time from 2 to 3 minutes. As a result of the film or coating provided on the undersurface of the protective floor, the protective floor covering can be used on multiple surfaces with out worry of damage to the surface from studs or worry of movement of the protective floor covering with use.

The coating is not limited to the underside surface of a protective floor matting, it can be applied to other protective coverings, or surfaces where an anti-slip function is needed, for example desk mats, mouse pads, place mats, drink coasters, desk storage containers or the like [0058] The amount of the copolymer resin coated onto the lower surface of the body will vary depending on the desired application. For example, where a higher friction, non-slip property of the coating is needed, a greater amount of the copolymer resin is applied to the lower surface. If a lower friction, non-slip property of the coating is needed, a lesser amount of the copolymer resin is applied to the lower surface. Generally, the amount of copolymer resin applied to the lower surface of the body is such that the friction provided by the coating permits the protective floor covering to be used on a generally smooth surface, e.g., hardwood, tile, slate, linoleum, concrete, and/or the like, and textured surfaces like low pile, medium pile, high pile and commercial grade carpeting without the use of suds or spikes. In this manner, the user can avoid damaging the smooth surface and/or textured surface with only one protective floor covering.

## Claims

1. A method of making a slip-resistant protective covering comprising the steps of:
providing a body having an upper planar surface and a lower planar surface;
applying a coating composition to the underside of the lower planar surface; and
curing the coating composition to provide a coating on the underside of the lower planar surface,
wherein the coating composition comprises a copolymer resin which comprises ethylene-vinyl acetate copolymer and a tackifier, wherein the ethylene-vinyl acetate copolymer is present in the copolymer resin in an amount of 40 to 95% by weight.

2. A method according to claim 1, wherein the copolymer resin contains a plasticizer.

3. A method according to either claim 1 or claim 2, wherein the static coefficient of friction between the coating after curing, and an underlying surface in contact with the coating, is from 1.0 to 1.10.

4. A protective covering which comprises a body having an upper planar surface and a lower planar surface and a coating provided on the underside of the lower planar surface wherein the coating comprises a cured copolymer resin which comprises ethylene-vinyl acetate copolymer and a tackifier, wherein the ethylene-vinyl acetate copolymer is present in the copolymer resin in an amount of 40 to 95% by weight.

5. A protective covering according to claim 4, wherein the copolymer resin additionally contains a plasticizer.

6. A protective covering according to either claim 4 or claim 5, which is a floor covering and wherein the body having an upper planar surface and a lower planar surface has a generally uniform thickness.

7. A protective covering according to claim 6, wherein the static coefficient of friction between the coating provided on the underside of the lower planar surface and an underlying surface in contact with the coating is from 1.0 to 1.10.

## Patentansprüche

1. Verfahren zum Herstellen eines rutschfesten Schutzbelags, die folgenden Schritte umfassend:
Bereitstellen eines Körpers, der eine obere planare Oberfläche und eine untere planare Oberfläche aufweist;
Aufbringen einer Beschichtungszusammensetzung auf die Unterseite der unteren planaren Oberfläche; und
Aushärten der Beschichtungszusammensetzung zum Bereitstellen einer Beschichtung auf der Unterseite der unteren planaren Oberfläche,
wobei die Beschichtungszusammensetzung ein Copolymer-Harz umfasst, welches ein Ethylen-Vinylacetat-Copolymer und einen Klebrigmacher umfasst, wobei das Ethylen-Vinylacetat-Copolymer im Copolymer-Harz in einer Menge von 40 bis 95 Gew.-% vorhanden ist.

2. Verfahren nach Anspruch 1, wobei das Copolymer-Harz einen Weichmacher enthält.

3. Verfahren nach Anspruch 1 oder Anspruch 2, wobei der statische Reibungskoeffizient zwischen der Beschichtung nach dem Aushärten und einer Unterlagefläche in Kontakt mit der Beschichtung 1,0 bis 1,10 beträgt.

4. Schutzbelag, der einen Körper mit einer oberen planaren Oberfläche und einer unteren planaren Oberfläche umfasst sowie eine Beschichtung aufweist, die auf der Unterseite der unteren planaren Oberfläche bereitgestellt wird, wobei die Beschichtung ein ausgehärtetes Copolymer-Harz umfasst, welches ein Ethylen-Vinylacetat-Copolymer und einen Klebrigmacher umfasst, wobei das Ethylen-Vinylacetat-Copolymer im Copolymer-Harz in einer Menge von 40 bis 95 Gew.-% vorhanden ist.

5. Schutzbelag nach Anspruch 4, wobei das Copolymer-Harz zusätzlich einen Weichmacher enthält.

6. Schutzbelag nach Anspruch 4 oder Anspruch 5, der ein Bodenbelag ist, und wobei der Körper mit einer oberen planaren Oberfläche und einer unteren planaren Oberfläche eine allgemein einheitliche Dicke aufweist.

7. Schutzbelag nach Anspruch 6, wobei der statische Reibungskoeffizient zwischen der Beschichtung, die auf der Unterseite der unteren planaren Oberfläche bereitgestellt wird, und einer Unterlagefläche in Kontakt mit der Beschichtung 1,0 bis 1,10 beträgt.

## Revendications

1. Procédé de fabrication d'un revêtement de protection antidérapant, comprenant les étapes consistant à :
utiliser un corps présentant une surface supérieure plane et une surface inférieure plane ;
appliquer une composition d'enduction sur la face inférieure de la surface inférieure plane ; et
cuire la composition d'enduction pour obtenir un enduit sur la face inférieure de la surface inférieure plane,
dans lequel la composition d'enduction comprend une résine copolymère qui comprend un copolymère d'acétate de vinyle-éthylène et un agent poisseux, dans lequel le copolymère d'acétate de vinyle-éthylène est présent dans la résine copolymère en une quantité de 40 à 95 % en poids.

2. Procédé selon la revendication 1, dans lequel la résine copolymère contient un plastifiant.

3. Procédé selon l'une ou l'autre des revendications 1 et 2, dans lequel le coefficient de frottement statique entre l'enduit après cuisson et une surface sous-jacente au contact de l'enduit se situe dans la plage de 1,0 à 1,10.

4. Revêtement de protection qui comprend un corps présentant une surface supérieure plane et une surface inférieure plane ainsi qu'un enduit se trouvant sur la face inférieure de la surface inférieure plane, dans lequel l'enduit comprend une résine copolymère cuite qui comprend un copolymère d'acétate de vinyle-éthylène et un agent poisseux, dans lequel le copolymère d'acétate de vinyle-éthylène est présent dans la résine copolymère en une quantité de 40 à 95 % en poids.

5. Revêtement de protection selon la revendication 4, dans lequel la résine copolymère contient en outre un plastifiant.

6. Revêtement de protection selon l'une ou l'autre des revendications 4 et 5, qui est un revêtement de sol et dans lequel le corps présentant une surface supérieure plane et une surface inférieure plane est d'une épaisseur généralement uniforme.

7. Revêtement de protection selon la revendication 6, dans lequel le coefficient de frottement statique entre l'enduit se trouvant sur la face inférieure de la surface inférieure plane et une surface sous-jacente au contact de l'enduit se situe dans la plage de 1,0 à 1,10.
